# EUROPÄISCHE PATENTSCHRIFT

(11) **EP 1 514 797 B1**
(45) Veröffentlichungstag und Bekanntmachung des Hinweises auf die Patenterteilung: **07.10.2009**
(21) Anmeldenummer: 03725932.2
(22) Anmeldetag: 21.04.2003
(51) Int. Cl.: B64C 11/46, B64C 27/08

(54) **GESCHLOSSENER FLÜGEL**
CLOSED WING
AILE A CONTOUR CLOS

(30) Priorität: 18.05.2002 RU 2002112900
(43) Veröffentlichungstag der Anmeldung: 16.03.2005
(73) Patentinhaber: Obschestvo s Ogranichennoi Otvetstvennostyu Midera-k, Moscow, 123053 (RU)
(72) Erfinder: Akaro, Andrey Igorevich, Moscow, 105037 (RU); Pepelin, Andrey Borisovich, Moscow, 113546 (RU); Zelinsky, Anatoly Mikhailovich, St.Petersburg, 197374 (RU); Medvedev, Mikhail Mikhailovich, Zhukovsky, Moskovskaya obl., 140186 (RU)
(74) Vertreter: Jeck, Anton
(86) Internationale Anmeldenummer: PCT/RU2003/000185
(87) Internationale Veröffentlichungsnummer: WO 2003/097452

(56) Entgegenhaltungen:
- RU-A1- 94 026 132
- US-A- 1 981 442
- US-A- 2 474 079
- US-A- 2 589 826
- US-A- 3 399 731
- US-A- 3 721 403
- US-A- 4 120 468
- US-A- 4 307 856

## Beschreibung

### Erfindungsbereich

Die Erfindung bezieht sich auf das Gebiet des Flugwesens und kann in einem aerodynamischen Hub- und Zugvortriebsaggregat verwendet werden, das in einem Fluggerät zur Schaffung der Antriebskraft und des Horizontalschubs installiert ist.

### Stand der Technik

US 3,721,403 wird als nächstliegender Stand der Tecknik angesehen und offenbart einen Drehflügel mit Rotorblätter, welche nahe an seinem Ende montiert sind. Des weiteren ist ein Hauptdrehflügel eines Hubschraubers bekannt, der bei seinem Drehen eine Hubkraft und eine Kraft für den Horizontalschub zum Fliegen des Hubschraubers erzeugt. (W. Jonson, "Theorie des Hubschraubers", Buch 1, M., Verlag "Mir", 1983, S. 17).

Weiterhin ist ein Hauptdrehflügel eines Hubschraubers bekannt, der bei seinem Drehen eine Hubkraft und eine Kraft für den Horizontalschub erzeugt. Eine der Flügelkanten ist keilförmig ausgebildet. (USA-Patent 706430, NKI 244/35, 1972).

Das Erzeugen der Hubkraft und des Horizontalschubs in einem aerodynamischen Hub- und Zugvortriebsaggregat mittels Flügel ist möglich, wenn diese sich in einem Umkreis bewegen und sich gleichzeitig synchron in Gegenrichtungen drehen. Dadurch wird eine fortschreitende Bewegung (ohne Drehung) der Flügel gegen die Luft erzeugt und eine gleichmäßige Verteilung der aerodynamischen Kräfte im Flügel hervorgerufen, die zu einer höheren Wirksamkeit der Hubkraft führt. Das Erzeugen des Horizontalschubs wird durch Schwingungen der Flügel synchron mit ihrer Drehung gegenüber zueinander senkrecht stehende Achsen herbeigeführt, die zur Bewegungsachse des Umkreises senkrecht stehen.

Für die Verwirklichung dieser komplizierten Bewegung ist eine besondere Form der Flügel erforderlich. Bei dieser Bewegung läuft der Flügel, der die aerodynamische Kraft erzeugt, konsequent gegen die Luft mit allen seinen Seiten an. Die gewöhnlichen Drehflügel des Hubschraubers taugen dafür nicht, weil sie speziell für das Auftreffen der Luft auf eine Seite des Flügels ausgelegt sind.

### Kurzfassung der Erfindung

Der Erfindung, wie im unabhängigen Anspruch 1 offenbart, liegt die Aufgabe der Schaffung eines Flügels zum Erzeugen des Auftriebs- und des Horizontalschubs zugrunde. Mit diesem Flügel wird mit maximaler aerodynamischer Wirksamkeit die Erzeugung des Auftriebs und des Horizontalschubs beim Auftreffen auf die Luft konsequent von allen seinen Seiten und bei Schwingungen gegenüber den senkrechten Achsen gesichert, die zur Bewegungsachse des Umkreises senkrecht stehen.

Die Aufgabe der Schaffung eines Flügels zum Erzeugen des Auftriebs und des Horizontalschubs wird dadurch gelöst, dass der Flügel zum Erzeugen des Auftriebs und des Horizontalschubs gemäß der Erfindung in Form einer drehsymmetrischen Platte ausgebildet ist, deren Kanten scharf ausgeführt sind. Der Flügel hat die Möglichkeit der Bewegung in einem Umkreis, der synchronen Drehung in Gegenrichtung und der synchronen Schwingungen gegenüber den senkrechten Achsen, die zur Bewegungsachse des Umkreises senkrecht stehen.

Die Ausbildung des Flügels in Form einer achssymmetrischen Platte, deren Kanten scharf ausgeführt sind, erlaubt der dünnen, flachen, scharfkantigen Platte bei der Erzeugung der fortschreitenden Bewegung und der Schwingungen ein gleichmäßiges Auftreffen auf die Luft mit allen ihren Seiten, und ferner wird ein geringer, aerodynamischer Widerstand erreicht.

Die Möglichkeit der Bewegung des Flügels im Umkreis und seiner synchronen Drehung in Gegenrichtung erzeugt eine fortschreitende Bewegung des Flügels gegen die Luft und sichert eine gleichmäßige Verteilung der aerodynamischen Kräfte im Flügel, die zu einer hohen Wirksamkeit des Auftriebs führt.

Die Möglichkeit der synchronen Schwingungen des Flügels gegenüber zueinander senkrecht stehende Bewegungsachsen des Umkreises sichert das Erzeugen des Horizontalschubs mit einer hohen aerodynamischen Wirksamkeit.

Die Platte kann mit zwei angerundeten Vorsprüngen ausgebildet sein, die symmetrisch zu ihrem Zentrum liegen. Jeder Vorsprung ist gegenüber seiner Symmetrieachse gewunden, wodurch ein Moment geschaffen wird, das zu den Schwingungen des Flügels gegenüber einer Achse beiträgt und diejenigen Kräfte vermindert, die für diese Schwingungen aufgewandt werden.

Die Platte kann mit vier abgerundeten Vorsprüngen ausgebildet sein, die symmetrisch zu ihrem Zentrum liegen. Jeder Vorsprung ist gegenüber seiner Symmetrieachse gewunden, wodurch ein Moment geschaffen wird, das zu den Schwingungen des Flügels gegenüber der senkrechten Achsen beiträgt und das diejenigen Kräfte vermindert, die für ihre Schwingungen aufgewandt werden.

### Kurzbeschreibung der Zeichnungen

Die Erfindung wird nun anhand von Ausführungsbeispielen näher erläutert. Es zeigen:

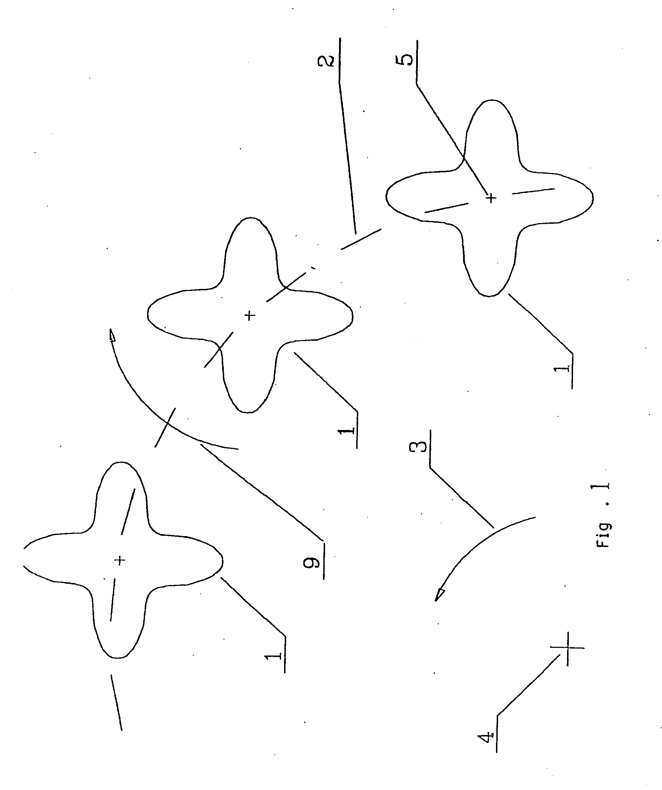

- Fig. 1: ein Schema der Bewegung des Flügels eines aerodynamischen Hub- und Zugvortriebsaggregats zum Erzeugen einer fortschreitenden Bewegung,
- Fig. 2: eine Draufsicht auf einen Flügel ohne Vorsprung,
- Fig. 3: einen Schnitt längs der Linie B-B in Fig. 2,
- Fig. 4: eine Draufsicht auf einen Flügel mit zwei Vorsprüngen,
- Fig. 5: eine Draufsicht auf den Flügel mit vier Vorsprüngen,

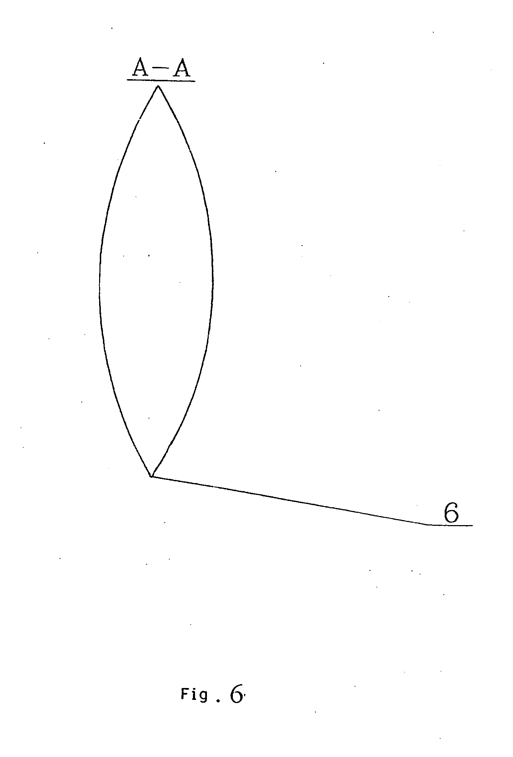

- Fig. 6: einen Schnitt längs der Linie A-A in Fig. 5,

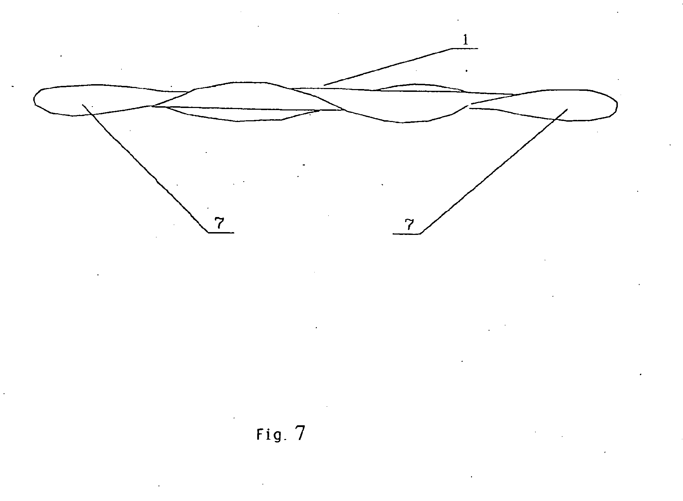

- Fig. 7: eine Seitenansicht des Flügels mit vier gewundenen Vorsprüngen und
- Fig. 8: ein Schema der Schwingungen des Flügels bei dessen Bewegung in einem Umkreis.

### Beschreibung von Ausführungsbeispielen der Erfindung

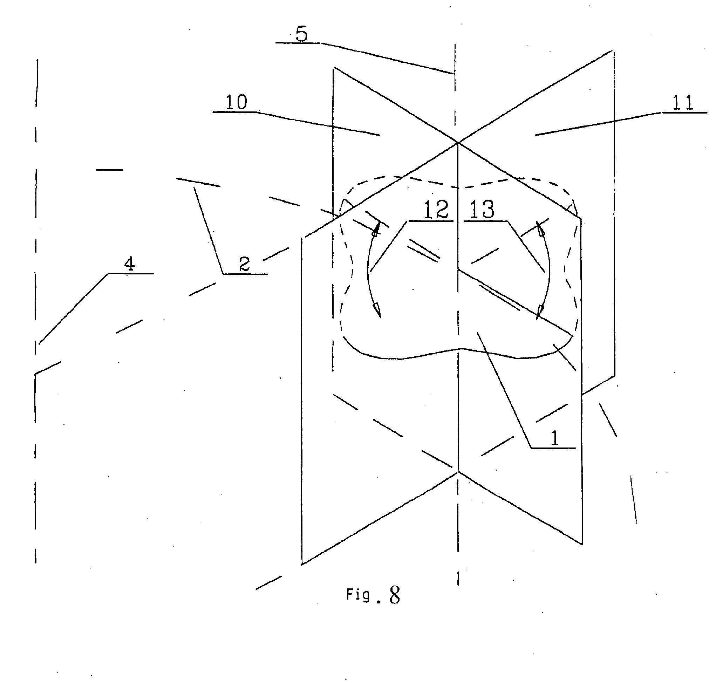

Ein Flügel 1 bewegt sich in einem Umkreis 2 in diejenige Richtung, in die ein Pfeil 3 um eine Bewegungsachse 4 zeigt. Der Flügel 1 dreht sich synchron mit der Bewegung gemäß dem Umkreis 2 in Gegenrichtung um eine Achse 5 in diejenige Richtung, in die ein Pfeil 9 zeigt, wobei diese Achse 5 parallel zur Bewegungsachse 4 angeordnet ist. Daher entsteht eine fortschreitende Bewegung des Flügels 1. Der Flügel 1 führt bei seiner Drehung Schwingungen gegenüber zwei zueinander senkrecht stehenden Achsen aus, die zur Bewegungsachse 4 senkrecht stehen und sich in zwei zueinander senkrechten Ebenen 10 und 11 (Fig. 8) befinden, die sich in der Achse 5 der Drehung kreuzen. Die Richtungen dieser Schwingungen sind durch Pfeile 12 und 13 jeweils in den Flächen 10 und 11 gezeigt. Weil sich der Flügel 1 fortschreitend bewegt, ist der damit verbundene, erzeugte Auftrieb gleichmäßig verteilt, wodurch eine hohe energetische Wirksamkeit gewährleistet ist. Bei den Schwingungen des Flügels 1 gegenüber den zueinander senkrechten Achsen, die zur Bewegungsachse 4 senkrecht stehen, wird zusammen mit dem Auftrieb der Horizontalschub erzeugt, wobei die Verteilung der aerodynamischen Kraft auf den Flügel 1 annähernd gleichmäßig ist.

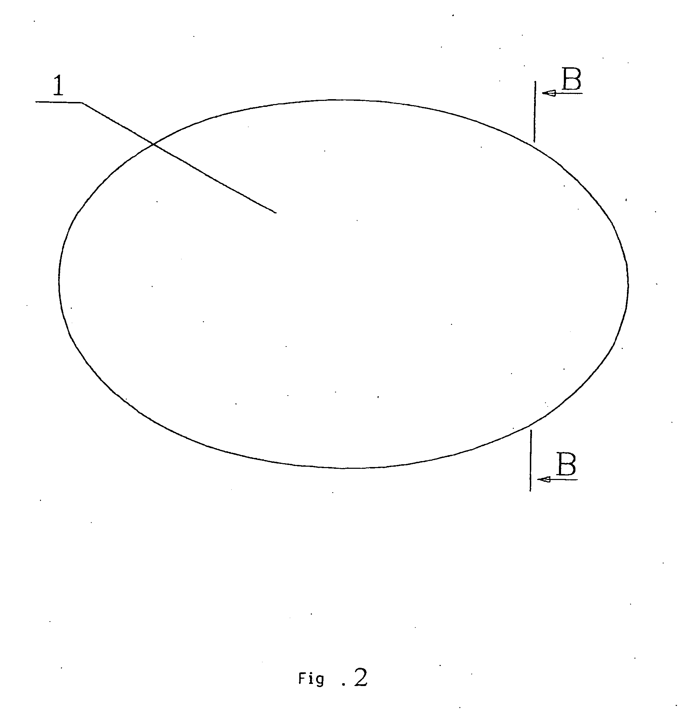

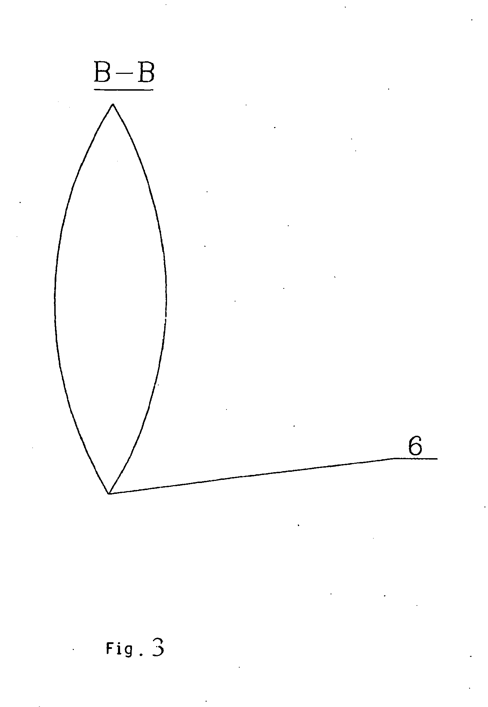

Der Flügel 1 ist nach Fig. 2 in Form einer achssymmetrischen Platte ausgebildet, deren Kanten 6 nach Fig. 3 scharf ausgeführt sind.
Der Flügel 1 hat die Möglichkeit der Bewegung im Umkreis 2, der synchronen Drehung in die Gegenrichtung und der synchronen Schwingungen gegenüber den zueinander senkrecht stehenden Achsen, die zur Bewegungsachse 4 des Umkreises 2 senkrecht stehen.

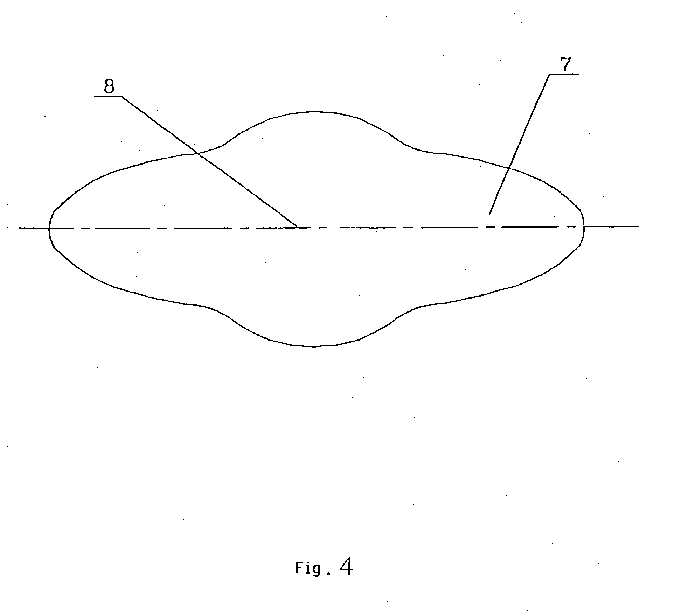

Die Platte des Flügels 1 kann nach Fig. 4 mit zwei abgerundeten Vorsprüngen 7 ausgeführt werden, die symmetrisch zu ihrem Zentrum liegen. Jeder Vorsprung 7 ist gegenüber seiner Symmetrieachse 8 gewunden.

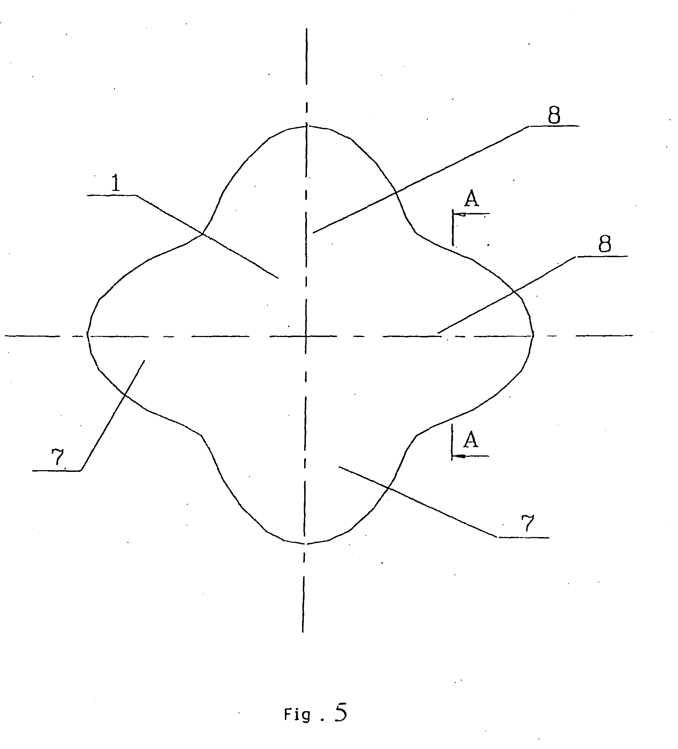

Die Platte des Flügels 1 kann nach Fig. 5 mit vier abgerundeten Vorsprüngen 7 ausgeführt werden, die symmetrisch zu ihrem Zentrum liegen. Jeder Vorsprung 7 ist gegenüber seiner Symmetrieachse 8 gewunden.

Die Ausführung des Flügels 1 in Form der achssymmetrischen Platte, deren Kanten 6 scharf ausgeführt sind, erlaubt der dünnen, flachen, scharfkantigen Platte bei der Erzeugung der fortschreitenden Bewegung und der Schwingungen ein gleichmäßiges Auftreffen auf die Luft mit allen ihren Seiten, und gleichzeitig wird ein geringer aerodynamischer Widerstand erreicht.

Die Möglichkeit der Bewegung des Flügels 1 im Umkreis 2 und dessen synchrone Drehung in Gegenrichtung erzeugt eine fortschreitende Bewegung des Flügels 1 gegen die Luft und sichert eine gleichmäßige Verteilung der aerodynamischen Kräfte im Flügel 1, die zu einer hohen Wirksamkeit des Auftriebs führt.

Die Möglichkeit der synchronen Schwingungen des Flügels 1 gegenüber den zueinander senkrecht stehenden Achsen, die zur Bewegungsachse 4 des Umkreises 2 senkrecht stehen, sichert die Erzeugung des Horizontalschubs mit einer hohen, aerodynamischen Wirksamkeit.

Die Ausführung der Platte mit zwei abgerundeten Vorsprüngen 7, die symmetrisch zu ihrem Zentrum liegen, und die Verdrehung jedes Vorsprungs 7 gegenüber dessen Symmetrieachse 8 führen zu der Schaffung eines Moments, das zu den Schwingungen des Flügels gegenüber einer Achse beiträgt und diejenigen Kräfte vermindert, die für diese Schwingungen aufgewandt werden.

Die Ausführung der Platte mit den vier abgerundeten Vorsprüngen 7, die symmetrisch zu ihrem Zentrum liegen, und die Verdrehung jedes Vorsprungs 7 des Flügels 1 gegenüber seiner Symmetrieachse 8 führen zur Schaffung eines Moments, das zu den Schwingungen des Flügels gegenüber einer Achse beiträgt und diejenigen Kräfte vermindert, die für diese Schwingungen aufgewandt werden.

Die Verdrehungswinkel der Vorsprünge werden aufgrund der Bedingung ausgewählt, dass der gemeinsame, aerodynamische Widerstand des Flügels mit den gewundenen Vorsprüngen den aerodynamische Widerstand ohne Verdrehung nicht mehr als um die genormte Berechnungstoleranz (20%) überschreitet. Der Flügel gemäß der Erfindung erlaubt, einen Flug des Fluggeräts mit hoher energetischer Wirksamkeit durchzuführen.

### Industrielle Anwendbarkeit

Am erfolgreichsten kann die Erfindung als Flügel zur Erzeugung der Antriebskraft und des Horizontalschubs in einem aerodynamischen Hub- und Zugvortriebsaggregat verwendet werden, das in einem Fluggerät installiert ist.

## Patentansprüche

1. Flügel zur Erzeugung eines Auftriebs und eines Horizontalschubs,
**dadurch gekennzeichnet,**
**dass** der Flügel (1) um eine Achse (4) umläuft und bei seinem Umlauf um die Achse (4) innerhalb einer durch den Flügel (1) hindurchgehenden und normal zu der Achse (4) verlaufenden Ebene ausschließlich eine translatorische Bewegung ausführt, wobei synchron mit dem Umlauf um die Achse (4) nacheinander alle Kanten (6) des Flügels (1) angeströmt werden.

2. Flügel nach Anspruch 1,
**dadurch gekennzeichnet,**
**dass** der Flügel (1) um zwei innerhalb zweier parallel zu der Achse (4) verlaufenden und einander senkrecht schneidenden Ebenen (10, 11) liegenden, einander senkrecht kreuzende Schwenkachsen schwenkbar angeordnet ist.

3. Flügel nach Anspruch 1 oder 2,
**dadurch gekennzeichnet,**
**dass** die translatorische Bewegung des Flügels (1) durch eine entgegen der Umlaufrichtung (3) synchron mit dem Umlauf um die Achse (4) erfolgende Drehung (9) des Flügels (1) um eine parallel zu der Achse (4) verlaufende Drehachse (5) erzeugt wird.

4. Flügel nach einem der Ansprüche 1, 2 oder 3,
**dadurch gekennzeichnet,**
**dass** der Flügel (1) als achssymmetrische Platte ausgeführt ist.

5. Flügel nach Anspruch 4,
**dadurch gekennzeichnet,**
**dass** die Platte mit zwei abgerundeten Vorsprüngen (7, Fig. 4) ausgebildet ist, die symmetrisch zu ihrem Zentrum liegen, und dass jeder Vorsprung gegenüber seiner Symmetrieachse (8) gewunden ist.

6. Flügel nach einem der Ansprüche 4 oder 5,
**dadurch gekennzeichnet,**
**dass** die Platte mit vier abgerundeten Vorsprüngen (7, Fig. 5) ausgebildet ist, die symmetrisch zu ihrem Zentrum liegen, und dass jeder Vorsprung gegenüber seiner Symmetrieachse (8, Fig. 5) gewunden ist.

7. Flügel nach einem der vorherigen Ansprüche,
**dadurch gekennzeichnet,**
**dass** die den Flügel (1) begrenzenden Kanten (6) spitz zulaufend ausgebildet sind.

## Claims

1. A wing for generating lift and horizontal thrust,
**characterized in that**
the wing (1) rotates around an axis (4) and, in the course of its rotation around the axis (4) in a plane extending through the wing (1) and extending normally in relation to the axis (4), it exclusively performs a translatory movement, in which air flows successively over all edges (6) of the wing (1).

2. The wing in accordance with claim 1,
**characterized in that**
the wing (1) is arranged to be pivotable around two pivot axes, which intersect each other vertically in two planes (10, 11), which cross each other vertically and extend parallel in respect to the axis (4).

3. The wing in accordance with claim 1 or 2,
**characterized in that**
the translatory movement of the wing (1) is generated by a rotation (9) of the wing (1) around an axis (5) of rotation extending parallel with the axis (4), which takes place opposite the direction of rotation (3) synchronously with the rotation around the axis (4).

4. The wing in accordance with one of claims 1, 2 or 3,
**characterized in that**
the wing (1) is embodied in the form of an axially symmetrical plate.

5. The wing in accordance with claim 4,
**characterized in that**
the plate is designed with two rounded protrusions (7, Fig. 4), which are located symmetrically in respect to the center of the plate, and that each protrusion is wound in relation to its axis of symmetry (8).

6. The wing in accordance with one of claims 4 or 5,
**characterized in that**
the plate is designed with four rounded protrusions (7, Fig. 5), which are located symmetrically in respect to the center of the plate, and that each protrusion is wound in relation to its axis of symmetry (8, Fig. 5).

7. The wing in accordance with one of the preceding claims,
**characterized in that**
the edges (6) delimiting the wing (1) are designed to be pointed.

## Revendications

1. Aile de production d'une portance et d'une poussée horizontale,
**caractérisée**
**en ce que** l'aile (1) tourne autour d'un axe (4) et lors de sa rotation autour de l'axe (4) exécute, dans un plan traversant l'aile (1) et normal à l'axe (4), exclusivement à un mouvement de translation, dans laquelle successivement tous les bords (6) de l'aile (1) reçoive un afflux en synchronisme avec la rotation autour de l'axe (4).

2. Aile suivant la revendication 1,
**caractérisée**
**en ce que** l'aile (1) est montée pivotante autour de deux axes de pivotement, se croisant perpendiculairement l'un à l'autre et se trouvant dans deux plans (10,11) parallèles à l'axe (4) et se coupant perpendiculairement l'un à l'autre.

3. Aile suivant la revendication 1 ou 2,
**caractérisée**
**en ce que** le mouvement de translation de l'aile (1) est produit, autour d'un axe de rotation s'étendant parallèlement à l'axe (4), par une rotation (9) de l'aile (1) s'effectuant dans le sens contraire du sens (3) de rotation en synchronisme avec la rotation autour de l'axe (4).

4. Aile suivant l'une des revendications 1, 2 ou 3,
**caractérisée**
**en ce que** l'aile (1) est constituée sous la forme d'une plaque à symétrie axiale.

5. Aile suivant la revendication 4,
**caractérisée**
**en ce que** la plaque est constituée en ayant deux saillies (7, figure 4) arrondies, qui sont symétriques par rapport à son centre et en ce que chaque saillie s'enroule en hélice par rapport à son axe (8) de symétrie.

6. Aile suivant l'une des revendications 4 ou 5,
**caractérisée**
**en ce que** la plaque est constituée en ayant quatre saillies (7, figure 5) arrondies, qui sont symétriques par rapport à son centre et en ce que chaque saillie s'enroule en hélice par rapport à son axe (8, figure 5) de symétrie.

7. Aile suivant l'une des revendications précédentes,
**caractérisée**
**en ce que** les bords (6) délimitant l'aile (1) sont en pointe.
